# EUROPEAN PATENT APPLICATION

(11) **EP 3 125 634 A1**
(43) Date of publication of application: **01.02.2017**
(21) Application number: 14886744.3
(22) Date of filing: 12.06.2014
(51) Int. Cl.: H04W 74/02

(54) **MESSAGE TRANSMISSION METHOD AND NODE DEVICE BASED ON NETWORK SELECTION AND TEMPORAL ARRANGEMENT**

(30) Priority: 28.03.2014 CN 201410123717
(71) Applicant: ZTE Corporation, Shenzhen, Guangdong 518057 (CN)
(72) Inventor: LI, Qiuting, Shenzhen Guangdong 518057 (CN)
(74) Representative: Lavoix
(86) International application number: PCT/CN2014/079795
(87) International publication number: WO 2015/143786

(57) **Abstract**

A method and a node device for message transmission in Internet of Things are provided. The method includes that: when each node registers on a node containing a public service entity, the node containing the public service entity receives a registration message from a registered node; and an access schedule and network communication information of the registered node contained in the registration message are stored, wherein the access schedule at least contains accessible time, and the network communication information at least contains an access manner supported by the registered node.

## Description

### TECHNICAL FIELD

The present disclosure relates to the technical field of communications, and in particular to a method and a node device for message transmission in an Internet of Things.

### BACKGROUND

The Internet of Things refers to that various types of terminal devices have access to an Internet-of-Things system and various Internet-of-Things services are provided based on the terminal devices. With the development of an Internet of Things, a Internet-of-Things system allows the terminal devices and applications to have access to the Internet-of-Things system by providing a public service capability assembly.

There will be a huge number of terminal devices in the Internet-of-Things system as well as numerous applications in the future, and various network communication manners can be supported in a mixed networking manner. With the high-speed development of the Internet of Things, burdens on a communication system will be increased. Meanwhile, in view of factors such as costs (a communication cost and a cost for manufacturing terminals), it is needed to effectively manage the communication of the Internet-of-Things system.

At present, the Internet-of-Things system may provide unified management for communication between accessed terminal devices and applications by virtue of the public service capability assembly. A network and time may be selected for the communication between different communication objects, but there is no solution to illustrate how to effectively communicate in multiple networks. The present disclosure, aiming at communication management, provides a communication management solution for controlling message transmission, thereby improving the message transmission efficiency, alleviating the burdens on the terminal devices, and reducing the message transmission cost as much as possible.

### SUMMARY

The technical problem to be solved by the embodiments of the present disclosure is to provide a message transmission method based on network selection and time arrangement and a node device, to improve the efficiency of message transmission and alleviate burdens on a terminal device.

To solve the technical problem, an embodiment of the present disclosure discloses a message transmission method based on network selection and time arrangement, which may include that:
when each node registers on a node containing a public service entity, the node containing the public service entity receives a registration message from a registered node, and an access schedule and network communication information of the registered node contained in the registration message are stored, wherein the access schedule at least contains accessible time, and the network communication information at least contains an access manner supported by the registered node.

Optionally, in the method, the network communication information may further include priority of the supported access manner.

Optionally, in the method, the access schedule may further contain a visitor list.

Optionally, the method may further include that:
when a first registered node sends a message to a second registered node, the node containing the public service entity inquires about an access schedule and network communication information of the second registered node locally or from the second registered node according to an inquiry message sent by the first registered node, and feeds back the access schedule and the network communication information to the first registered node;
the first registered node selects a communication manner for message transmission and a time for message transmission according to the access schedule and network communication information of the second registered node in combination with a locally configured message transmission policy, and sends the message to be sent to the second registered node and the selected communication manner for message transmission and the selected time for message transmission to the node containing the public service entity; and
the node containing the public service entity sends the received message to the second registered node within the selected time in accordance with the communication manner for message transmission selected by the first registered node.

Optionally, the method may further include that:
when sending a message to the second registered node, the first registered node sends the message to be sent to the second registered node to the node containing the public service entity, and indicates that a destination of the message is the second registered node;
the node containing the public service entity sets a message transmission policy, according to the access schedule and the network communication information of the second registered node in combination with a transmission policy of the node containing the public service entity; and
the node containing the public service entity sends the message to be sent to the second registered node to the second registered node according to the set transmission policy.

Optionally, the method may further include that:
when sending a message to the second registered node, the first registered node sends the message to be sent to the second registered node to a first-hop node containing a public service entity, wherein it is indicated that a destination of the message is the second registered node;
when the first-hop node containing the public service entity determines that multiple hops exist between the first registered node and the second registered node, a message transmission route is selected according to a policy, an access schedule and network communication information needing to be transmitted to a next-hop node are analyzed, a message transmission policy is configured based on a transmission policy of the first-hop node containing the public service entity, and the message is sent to a next-hop node containing a public service entity; and
by this analogy, a final-hop node containing the public service entity configures a message transmission policy according to the access schedule and network communication information of the second registered node in combination with a transmission policy of the final-hop node containing the public service entity, and the message is sent to the second registered node in accordance with the configured message transmission policy.

An embodiment of the present disclosure also discloses a message transmission method based on network selection and time arrangement, which may include that:
when a message is sent between a first registered node and a second registered node both registering on an identical node containing a public service entity, the node containing the public service entity inquires about an access schedule and network communication information of the second registered node locally or from the second registered node according to an inquiry message sent by the first registered node, and feeds back the access schedule and the network communication information to the first registered node;
the first registered node selects a communication manner for message transmission and a time for message transmission according to the access schedule and network communication information of the second registered node in combination with a local message transmission policy, and sends the selected communication manner for message transmission and the selected time for message transmission and a message to be sent to the second registered node to the node containing the public service entity; and
the node containing the public service entity sends the message to the second registered node within the selected time in accordance with the communication manner for message transmission selected by the first registered node.

An embodiment of the present disclosure also discloses a message transmission method based on network selection and time arrangement, which may include that:
when a message is sent between a first registered node and a second registered node both registering on an identical node containing a public service entity, the first registered node sends a message to be sent to the second registered node to the node containing the public service entity, and indicates that a destination of the message is the second registered node; and
the node containing the public service entity sets a message transmission policy according to an access schedule and network communication information of the second registered node in combination with a transmission policy of the node containing the public service entity, and sends the message to be sent to the second registered node to the second registered node in accordance with the set message transmission policy.

An embodiment of the present disclosure also discloses a message transmission method based on network selection and time arrangement, which may include that:
when a first registered node is to send a message to a second registered node, the first registered node sends the message to be sent to the second registered node to a first-hop node containing a public service entity, wherein it is indicated that a destination of the message is the second registered node;
when the first-hop node containing the public service entity determines that multiple hops exist between the first registered node and the second registered node, a message transmission route is selected according to a policy, an access schedule and network communication information needing to be transmitted to a next-hop node are analyzed, a message transmission policy is configured based on a transmission policy of the first-hop node containing the public service entity, and the message is sent to a next-hop node containing a public service entity; and
by this analogy, a final-hop node containing a public service entity configures a message transmission policy according to an access schedule and network communication information of the second registered node in combination with a transmission policy of the final-hop node containing the public service entity, and the message is sent to the second registered node in accordance with the configured message transmission policy.

An embodiment of the present disclosure also discloses a message transmission method based on network selection and time arrangement, which may include that:
when a first node containing a public service entity registers on a public service entity of a second node, the second node receives a registration message sent by the first node, and an access schedule and network communication information of the first node are automatically generated on the public service entity of the first node, wherein the access schedule at least contains accessible time, and the network communication information at least contains an access manner supported by the first node.

An embodiment of the present disclosure also discloses a node device, which may include:
a transceiving unit, configured to receive a registration message from a registered node;and
a storage unit, configured to store an access schedule and network communication information of the registered node contained in the registration message, wherein the access schedule at least contains accessible time, and the network communication information at least contains an access manner supported by the registered node.

Optionally, in the node device, the network communication information may further include priority of the supported access manner.

Optionally, the node device may further include:
an inquiry unit, configured to inquire about an access schedule and network communication information of a message receiving end locally according to an inquiry message sent by a message sending end; and
the transceiving unit, configured to feed back the inquired access schedule and network communication information of the message receiving end to the message sending end, and send a message to the message receiving end within selected time in accordance with a communication manner for message transmission selected by the message sending end.

Optionally, the node device may further include:
an inquiry unit, configured to inquire about an access schedule and network communication information of a message receiving end locally;
a processing unit, configured to set a message transmission policy according to the inquired access schedule and network communication information of the message receiving end in combination with a transmission policy of the node containing the public service entity; and
the transceiving unit, configured to send a message to be sent by the message sending end to the message receiving end in accordance with the message transmission policy set by the processing unit.

Optionally, in the node device, the processing unit may be further configured to determine whether multiple hops exist between the message sending end and the message receiving end, select, if multiple hops exist, a message transmission route according to a policy, analyze an access schedule and network communication information needing to be transmitted to a next-hop node, configure a message transmission policy based on a transmission policy of the node containing the public service entity, and send the message to a next-hop node containing a public service entity.

The technical solutions of the present disclosure provide a communication management solution for controlling message transmission, thereby improving the efficiency of message transmission and alleviating burdens on a terminal device.

### BRIEF DESCRIPTION OF THE DRAWINGS

Fig. 1 is a structural diagram illustrating an Internet-of-Things system according to an embodiment of the present disclosure;
Fig. 2 is a flowchart showing registration configurations in an embodiment of the present disclosure;
Fig. 3 is a flowchart showing that a message sender controls message transmission in an embodiment of the present disclosure;
Fig. 4 is a flowchart showing that a node containing a public service entity automatically controls message transmission in an embodiment of the present disclosure; and
Fig. 5 is a flowchart showing that multiple nodes containing public service entities transmit messages in an embodiment of the present disclosure.

### DETAILED DESCRIPTION

In order to make purposes, technical solutions and advantages of the present disclosure clearer, the technical solutions of the present disclosure will be further illustrated below together with the drawings in detail. It is to note that the embodiments of the present disclosure and the characteristics in the embodiments can be arbitrarily combined under the condition of no conflicts.

### Embodiment 1

In order to achieve communications in an Internet-of-Things system in the case of a heterogeneous network and effective message transmission, the present embodiment provides a solution for network selection and access time control of node communication, which may select different pieces of network technology transmission information according to policies, and control access to a node according to access time.

Here, in the Internet-of-Things system, a terminal device, a gateway device and a platform are collectively referred to as a node. The platform and the gateway device contain public service entities, and the terminal device probably contains a public service entity or probably only contains an application entity.

Registration between nodes is actually registration between public service entities or registration between an application and a public service entity. The terminal device, the gateway device and the platform may contain application entities and public service entities simultaneously, so a local application needs to register on a local public service entity. It is to note that when a node contains an application entity and a public service entity simultaneously, the application entity needs to register on the public service entity.

With regard to network selection, when a node registers on a public service entity, descriptions of basic attributes of a network communication manner which can be supported by the node are created on the public service entity, and meanwhile, descriptions of corresponding network communication Quality of Service (QoS) attributes such as attributes including a time delay, a packet loss and a terminal device access point can be created. If a network supported by the node can provide a service capability, the network can be described by adding more attributes. For example, a 3rd Generation Partnership Project (3GPP) network can provide a service capability in device triggering, a triggering state, a triggering result and the like need to be described by creating corresponding attributes.

With regard to control over time of access to the node, when the node registers on the public service entity, a corresponding attribute-accessible schedule is created on the public service entity, a visitor can operate the node within accessible time, and reasonable node allocation alleviates node loads and improves the efficiency of message transmission.

With regard to a node containing a public service entity, the public service entity of the node contains a schedule describing accessible time, the schedule configures time when a visitor has access to the node, the access time for different visitors is probably different, the schedule in the public service entity can be corrected (deleted or updated), and if the accessible time and the corresponding visitors are increased, description information about the attribute can be opened to the visitors or the public service entity for use.

A public service entity may select a current reasonable network communication manner according to an accessible schedule of a node, a usage schedule of a supported network, a network communication manner supported by a terminal device or an application and a configured policy, and a message is transmitted within effective time. For example, a application server needs to send a message to a terminal device according to a schedule in which the application server can access the terminal device and a network communication manner which can be selected within accessible time, and if two or more network communication manners exist, a most appropriate network transmission message is selected according to descriptions of network QoS attributes which can be selected within the time, information such as priority of a message to be transmitted, and a policy. If message transmission fails and there are more than two network communication manners, an appropriate network can be reselected to transmit information.

A public service entity can open, to a user having an access permission, an access schedule of a node created thereon, a schedule for network communication and attributes described by a communication manner. The user may select appropriate time and an appropriate network to access the node according to his/her own policy; and meanwhile, a message sender may also select a communication manner replied by an appointed node according to its own requirements. The public service entity may also control message transmission according to a local policy thereof, and the message sender only needs to transmit a message to the public service entity without knowing how the public service entity is transmitted to a destination.

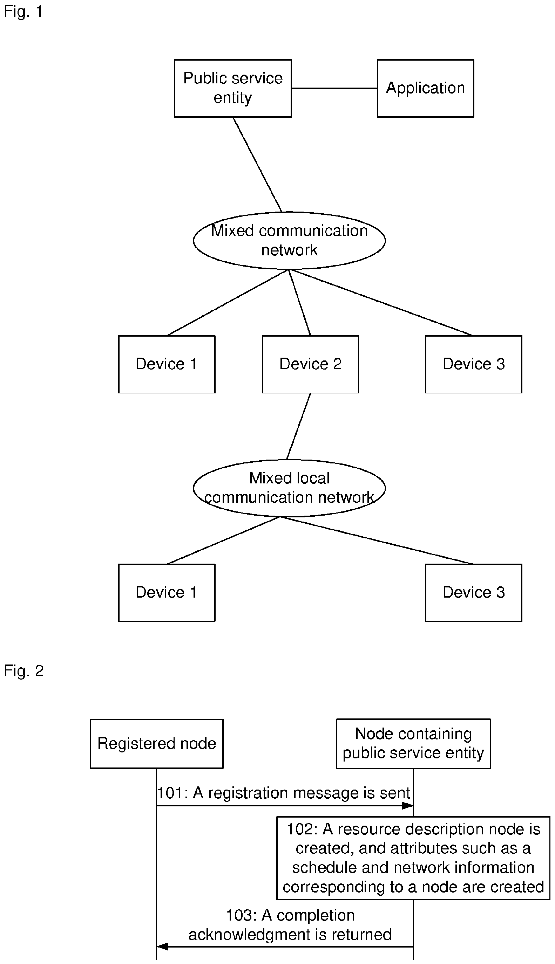

Fig. 1 is a structural diagram illustrating an Internet-of-Things system for implementing message transmission control over an Internet of Things according to the present disclosure. When nodes communicate with each other, attributes are created in a public service entity of a node to describe an accessible schedule for other registered nodes, and attributes are created to describe a network communication manner supported by an accessed node and a schedule which can be used for network communication; attribute descriptions of network communication can be expanded, and QoS of network communication can be described; if network communication provides a service capability, it can be implemented by adding corresponding attribute descriptions; and for example, a 3GPP network provides a device triggering capability, and attributes such as a current triggering state and a triggering result can be added.

Here, in an Internet-of-Things system, a terminal device, a gateway device and a platform are collectively referred to as nodes. The platform and gateway device nodes contain public service entities, and the terminal device node probably contains a public service entity or probably only contains an application entity. Registration between nodes is actually registration between public service entities or registration between an application and a public service entity. The terminal device, the gateway device and the platform may contain application entities and public service entities simultaneously, so a local application needs to register on a local public service entity.

A public service entity can select an appropriate network to transmit a message within effective time according to a network communication manner, available time of a network, accessible time of a node, and priority of the transmitted message as well as a policy; and a visitor can also acquire information such as an accessible schedule, a selectable network communication manner, usage time of the network and QoS attributes of the network via the public service entity, and can select an appropriate network transmission message according to the policy of the visitor.

Before nodes communicate with each other, it is needed to ensure that a visited node registers on a public service entity of an access node or the nodes are registered with each other. If the visited node only contains an application entity, attribute descriptions such as a schedule for access of the visited node, a network communication manner supported by the access and a usage schedule of a network are created in the registered public service entity after registration. If the accessed node contains a public service entity, attribute descriptions such as a network communication manner supported by the registered accessed node are created in the public service entity of the access node after registration, and more attributes can be created in the public service entity to describe the network. For example, the QoS of the network is described, and when the network can provide a service capability, corresponding attributes associated with the service capability are described. An access schedule for the accessed node can be generated in the public service entity of the accessed node.

By means of information (including attribute information such as a supported network name, type and QoS of a network) about an accessible schedule for a node containing a public service entity or a node registering on a public service entity and a selectable network communication manner, the public service entity or a message sender can determine when the node can be accessed according to a schedule (the accessible schedule and a schedule which can be used by the network) and determine which network communication manners can be selected within accessible time; if there are more than two communication manners, a manner can be selected according to priority of a message and the QoS of network communication; and for example, a high-priority message can be transmitted by selecting and using a network with greatest bandwidth and highest transmission rate among networks within the accessible time, and a low-priority message can be transmitted by selecting and using a network with low cost and ordinary transmission rate among networks within the accessible time. Meanwhile, in view of factors such as the QoS or cost of network communication, the message sender can also appoint a network communication manner during message replying; and under the conditions of the accessible time of the node, the network communication manner, the usage time of the network or the communication QoS thereof, the public service entity or the message sender selects a current most appropriate manner according to a policy to transmit information, and configures parameters, such as the ending time and the retransmission frequency of the message, in the transmitted information. If nodes contain public service entities, when these nodes register on public service entities of other nodes, it may be unnecessary to generate accessible schedules on the registered public service entities, and the public service entities contained by these nodes have contained the accessible schedules of the nodes. When a node contains a public service entity, an access schedule of the node is contained, and the schedule can be provided for a visitor or public service entities of other nodes.

On the basis of the above idea, the present embodiment provides a message transmission method based on network selection and time arrangement, which includes the operations as follows.

When each node registers on a node containing a public service entity, the node containing the public service entity receives a registration message from a registered node, and an access schedule and network communication information of the registered node contained in the registration message are stored, wherein the access schedule at least contains accessible time and a visitor list, and the network communication information at least contains an access manner supported by the registered node.

Preferably, the network communication information may include a supported access manner QoS. Fig. 2 is a specific flow for creating an access schedule and a selectable network for access to a registered node when a node excluding a public service entity (only including an application entity) registers on a node containing a public service entity.

Creation may be directly completed during registration or performed after basic registration, and it is only needed to create corresponding attributes in the registered public service entity to describe a network and relevant information. The steps are as follows.

Step 101: A node sends a registration message to a node containing a public service entity, the registration message containing attribute information created to describe an access schedule and network communication.

Step 102: The node containing the public service entity creates a plurality of attributes under a resource to place the access schedule and network communication information of the registered node.

Here, the access schedule contains accessible time of the registered node and a time list used for network communication. If the registered node can be accessed by a plurality of visitors, corresponding access time can be set for each visitor. For example, a certain time period corresponds to some visitors, and it is represented that these visitors can communicate with the node within the time; and the network communication information contains a network communication manner such as 2G, 3G and xPON, which can be supported by the registered node. The QoS of network communication may be described. For example, a network supporting provision of a service capability may add information descriptions corresponding to the service capability.

Step 103: The node containing the public service entity returns a registration success message to the registered node.

If a corresponding relationship between access time and a visitor is described in an accessible schedule, when a new visitor needs to access a node or a visitor no longer access the node, schedule information in the node containing the public service entity can be changed/added.

If a node contains an application entity and a public service entity simultaneously, when the node registers on public service entities of other nodes, it is unnecessary to create an access schedule of a registered node, and a public service entity of the registered node may automatically generate an access schedule of a visitor which has access thereto and correspondingly registers thereon.

After the node completes registration, when a first registered node sends a message to a second registered node, the node containing the public service entity inquires about an access schedule and network communication information of the second registered node locally or from the second registered node according to an inquiry message sent by the first registered node, and feeds back the access schedule and the network communication information to the first registered node; the first registered node selects a communication manner for message transmission and a time for message transmission, according to the access schedule and network communication information of the second registered node in combination with a locally configured message transmission policy, and sends a message to be sent to the second registered node and the selected communication manner for message transmission and the selected time for message transmission to the node containing the public service entity; and in this case, the node containing the public service entity sends the received message to the second registered node within the selected time in accordance with the communication manner for message transmission selected by the first registered node.

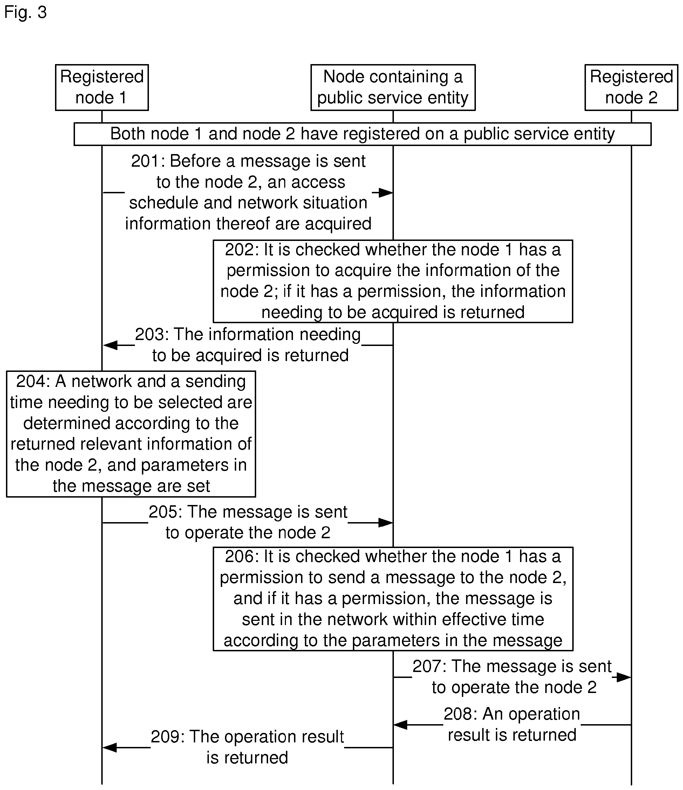

Fig. 3 is a specific flow showing that a message sender controls message transmission during message transmission.

The pre-conditions for sending of a message from registered node 1 to registered node 2 are that nodes at two ends both register on public service entities. When a message sender (namely the registered node 1) self-configures a transmission policy, it is needed to acquire an access schedule of a message receiver (namely the registered node 2) and supported network communication information from a node containing a public service entity or the registered node 2, and network communication is selected within accessible time according to the policy. The flow specifically includes the operations as follows.

Step 201: When preparing for sending a message to the registered node 2, the registered node 1 sends the message to a node containing a public service entity to acquire an access schedule and network communication information (including a network name, network QoS, an access point address and a usable schedule of a network) of the registered node 2.

Step 202: After receiving an inquiry message, the node containing the public service entity checks whether the registered node 1 has a permission to acquire information; if it has a permission, the access schedule and network communication information of the registered node 2 are retrieved, and if it does not have a permission, the message is returned to the registered node 1.

It is to note that if the registered node 2 contains a public service entity, other nodes containing public service entities need to acquire the access schedule from the registered node 2.

Step 203: The node containing the public service entity returns retrieved information to the registered node 1.

Step 204: The registered node 1 selects a network communication manner for message transmission and time for message transmission, according to the returned information together with a locally configured message transmission policy.

Preferably, the registered node may also configure parameters in the message, including a communication manner for message returning and the number of retransmission times of a message.

Step 205: The registered node 1 sends a configured message for operating the registered node 2 to the node including the public service entity, a destination of the message being the registered node 2.

Step 206: The node containing the public service entity checks whether the registered node 1 has a permission to send the message; if it has a permission, Step 207 is executed, and if it does not have a permission, a result showing no permission is returned to the registered node 1.

If the registered node 1 has the permission, the message cannot be sent, and more than two network communication manners exist, then a message can be returned to the registered node 1, the registered node 1 repeatedly executes Step 204 and Step 205 to select other communication manners, and the transmitted message is configured and then is sent in Step 206.

If a network provides a relevant service capability, the situation that the message cannot be sent can be handled by virtue of a network capability, and after handling succeeds, it is unnecessary to repeatedly execute Step 204 and Step 205.

Step 207: The node containing the public service entity sends the message to the registered node 2 within the set time in accordance with the network selected by the registered node 1.

Step 208: After receiving the message, the registered node 2 executes an operation, and returns an operation result to the node containing the public service entity.

Step 209: The node containing the public service entity forwards the operation result returned by the registered node 2 to the registered node 1 which sends an operation message.

In addition, when sending a message to the second registered node, the first registered node may send the message to be sent to the second registered node to the node containing the public service entity, and indicates that a destination of the message is the second registered node. Thus, the node containing the public service entity sets a message transmission policy according to the access schedule and network communication information of the second registered node together with a transmission policy of the node containing the public service entity; and thereafter, the message to be sent to the second registered node is sent to the second registered node according to the set transmission policy.

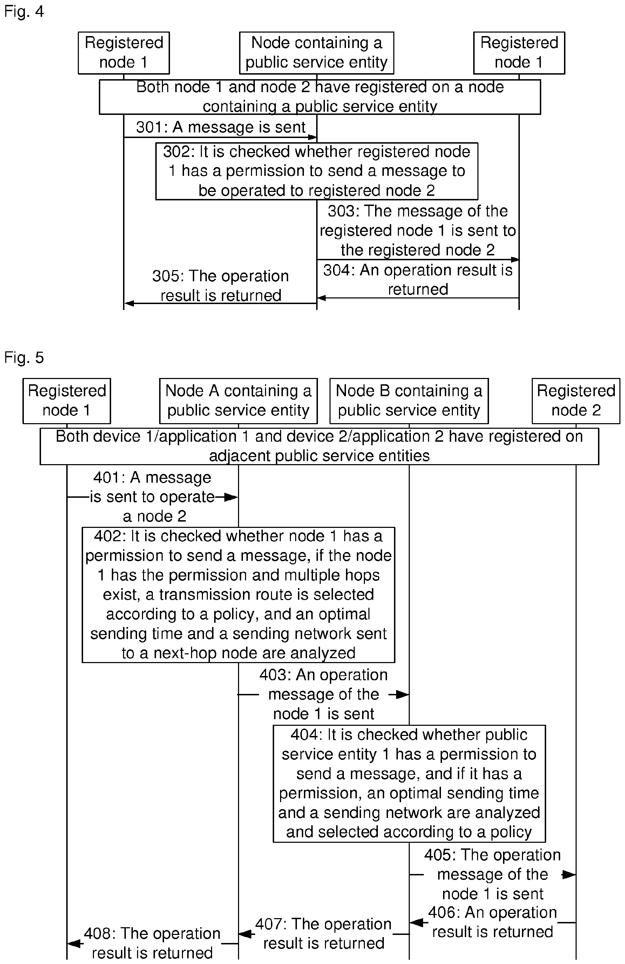

Fig. 4 is a specific flow showing that a node containing a public service entity automatically controls message transmission during message transmission.

The pre-conditions for sending of a message from node 1 to node 2 are that nodes at two ends both register on a node containing a public service entity. The node containing the public service entity provides a communication management capability to automatically transmit a message to registered node 2 according to a policy configured thereby, and after sending the message, registered node 1 only needs to wait for an operation result to be returned.

Step 301: The registered node 1 sends a message to a node containing a public service entity, and indicates that a destination of the message is the registered node 2.

Step 302: The node containing the public service entity checks whether the registered node 1 has a permission to send a message to be operated to the registered node 2; if it has a permission, a message transmission policy is configured according to information such as an access schedule (which may be retrieved locally or acquired from the registered node 2) of the registered node 2, priority of the message and network communication (including a network name, network QoS, an access point address and a usable schedule of a network) and a local transmission policy of the node containing the public service entity.

Step 303: The node containing the public service entity sends the message of the registered node 1 to the registered node 2 according to the configured message transmission policy.

If the registered node 1 has the permission, the message cannot be sent and more than two network communication manners exist, then Step 302 is repeatedly executed to select other communication manners, and the transmitted message is configured and then is sent in Step 303. If the network provides a relevant service capability, the situation that the message cannot be sent can be handled by virtue of a network capability, and after handling succeeds, the message is sent in Step 303.

Step 304: After receiving the message, the registered node 2 executes an operation, and returns an operation result to the node containing the public service entity.

Step 305: The node containing the public service entity sends a returned message about the operation result to the registered node 2.

When the first registered node sends a message to the second registered node, multiple hops probably exist. In this case, the first registered node sends the message to be sent to the second registered node to a first-hop node containing a public service entity, wherein it is indicated that a destination of the message is the second registered node;
when the first-hop node containing the public service entity determines that multiple hops exist between the first registered node and the second registered node, a message transmission route is selected according to a policy, an access schedule and network communication information needing to be transmitted to a next-hop node are analyzed, a message transmission policy is configured based on a transmission policy of the first-hop node containing the public service entity, and a message is sent to a next-hop node containing a public service entity; and by this analogy, a final-hop node containing the public service entity configures a message transmission policy according to the access schedule and network communication information of the second registered node in combination with a transmission policy of the final-hop node containing the public service entity, and the message is sent to the second registered node in accordance with the configured message transmission policy.

Fig. 5 is a specific flow showing that multiple nodes containing public service entities achieve message transmission during message transmission.

Registered node 1 may transmit a message to registered node 2 using two or more nodes containing public service entities in some scenarios. If the message may reach a destination after being routed by a plurality of Internet-of-Things gateways and the Internet-of-Things gateways contain public service entities, the message probably passes through a heterogeneous communication network in a transmission process. The nodes containing the public service entities need to transmit the message to a destination in an optimal manner according to communication management capabilities thereof. The present embodiment provides a scenario where message transmission is achieved by virtue of two nodes containing public service entities.

Step 401: The registered node 1 sends a message to node A containing a public service entity, and indicates that a destination of the message is registered node 2.

Step 402: The node A containing the public service entity checks whether the registered node 1 has a permission to send a message; if the registered node 1 has the permission and multiple hops exist between the registered node 1 and the destination registered node 2, a message transmission route is selected according to a policy, information such as an access schedule, priority of the message and network communication (including a network name, network QoS, an access point address and a usable schedule of a network) needing to be transmitted to a next-hop node is analyzed, and a message transmission policy is configured based on a transmission policy locally configured by the node A containing the public service entity.

If the registered node 1 does not have the permission, a message indicating no permission is returned to the registered node 1.

Step 403: The node A containing the public service entity sends a message for operating the registered node 2 to a node B containing a public service entity according to configured message parameters.

Step 404: The node B containing the public service entity checks whether the node A containing the public service entity has a permission to send a message to the registered node 2; if it has a permission, a message transmission policy is configured based on a local transmission policy of the node B containing the public service entity and according to information such as an access schedule of the registered node 2, priority of the message and network communication (including a network name, network QoS, an access point address and a usable schedule of a network).

Step 405: The node B containing the public service entity sends the message to the destination registered node 2 in accordance with the configured message transmission policy.

Step 406: The registered node 2 returns an operation result about the message to the node B containing the public service entity.

Step 407: The node B containing the public service entity returns the operation result to the node A containing the public service entity.

Step 408: The node A containing the public service entity returns the operation result to the message sender namely the registered node 1.

### Embodiment 2

The present embodiment provides a node device which may be a gateway device, a platform and the like in an Internet-of-Things system. The node device includes, at least, the following units:
a transceiving unit, configured to receive a registration message from a registered node;and
a storage unit, configured to store an access schedule and network communication information of the registered node contained in the registration message, wherein the access schedule at least contains accessible time, and the network communication information at least contains an access manner supported by the registered node.

In addition, as needed, a visitor list may be contained in the storage unit. Preferably, the network communication information may further include QoS of the supported access manner.

On the basis of the above structure, the node device may further include an inquiry unit, configured to inquire about an access schedule and network communication information of a message receiving end locally or inquire about information about the access schedule from the message receiving end according to an inquiry message sent by a message sending end. In this case, the transceiving unit is configured to feed back the inquired access schedule and network communication information of the message receiving end to the message sending end, and send a message to the message receiving end within selected time in accordance with a communication manner for message transmission selected by the message sending end.

In addition, the node device may further include a processing unit. The processing unit is configured to set a message transmission policy, based on a transmission policy of the node containing the public service entity and according to the inquired access schedule and network communication information of the message receiving end after the access schedule and network communication information of the message receiving end are found. In this case, the transceiving unit is configured to send a message to be sent by the message sending end to the message receiving end in accordance with the message transmission policy set by the processing unit.

Certainly, the processing unit may be further configured to determine whether multiple hops exist between the message sending end and the message receiving end, select, if multiple hops exist, a message transmission route according to a policy, analyze an access schedule and network communication information needing to be transmitted to a next-hop node, configure a message transmission policy based on a transmission policy of the node containing the public service entity, and send a message to a next-hop node containing a public service entity.

Other specific operations of the node device may refer to corresponding contents of the embodiment 1, which will not be elaborated herein.

Those skilled in the art may understand that all or some of the steps in the above method may be completed by instructing relevant hardware via a program, and the program may be stored in a computer readable storage medium such as a read-only memory, a magnetic disk or an optical disc. Optionally, all or some of the steps in the above embodiment may be implemented by virtue of one or more integrated circuits. Correspondingly, each module/unit in the above embodiment may be implemented in a form of hardware or a form of a software function module. The present disclosure is not limited to combination of hardware and software in any specific forms.

The above is only the preferred embodiments of the present disclosure, and is not intended to limit the protective scope of the present disclosure. Any modifications, equivalent replacements, improvements and the like made within the spirit and principle of the present disclosure shall fall within the protective scope of the present disclosure.

## Claims

1. A message transmission method based on network selection and time arrangement, comprising:
when each node registers on a node containing a public service entity, receiving, by the node containing the public service entity, a registration message sent by a registered node, and storing an access schedule and network communication information of the registered node contained in the registration message,
wherein the access schedule at least contains accessible time, and the network communication information at least contains an access manner supported by the registered node.

2. The method according to claim 1, wherein the network communication information further comprises priority of the supported access manner.

3. The method according to claim 1, wherein the access schedule further contains a visitor list.

4. The method according to any one of claims 1 to 3, further comprising:
when a first registered node sends a message to a second registered node, inquiring about, by the node containing the public service entity, an access schedule and network communication information of the second registered node locally or from the second registered node according to an inquiry message sent by the first registered node, and feeding back the access schedule and the network communication information to the first registered node;
selecting, by the first registered node, a communication manner for message transmission and a time for message transmission according to the access schedule and the network communication information of the second registered node in combination with a locally configured message transmission policy, and sending the message to be sent to the second registered node and the selected communication manner for message transmission and the selected time for message transmission to the node containing the public service entity; and
sending, by the node containing the public service entity, the received message to the second registered node within the selected time in accordance with the communication manner for message transmission selected by the first registered node.

5. The method according to any one of claims 1 to 3, further comprising:
when a first registered node sends a message to a second registered node, sending, by the first registered node, the message to be sent to the second registered node to the node containing the public service entity, and indicating that a destination of the message is the second registered node;
setting, by the node containing the public service entity, a message transmission policy according to an access schedule and network communication information of the second registered node in combination with a transmission policy of the node containing the public service entity; and
sending, by the node containing the public service entity, the message to be sent to the second registered node to the second registered node according to the set transmission policy.

6. The method according to any one of claims 1 to 3, further comprising:
when a first registered node is to send a message to a second registered node, sending, by the first registered node, the message to be sent to the second registered node to a first-hop node containing a public service entity, wherein it is indicated that a destination of the message is the second registered node;
when the first-hop node containing the public service entity determines that multiple hops exist between the first registered node and the second registered node, selecting a message transmission route according to a policy, analyzing an access schedule and network communication information needing to be transmitted to a next-hop node, configuring a message transmission policy based on a transmission policy of the first-hop node containing the public service entity, and sending the message to a next-hop node containing a public service entity; and
by this analogy, configuring, by a final-hop node containing a public service entity, a message transmission policy according to an access schedule and network communication information of the second registered node in combination with a transmission policy of the final-hop node containing the public service entity, and sending the message to the second registered node in accordance with the configured message transmission policy.

7. A message transmission method based on network selection and time arrangement, comprising:
when a message is sent between a first registered node and a second registered node both registering on an identical node containing a public service entity, inquiring about, by the node containing the public service entity, an access schedule and network communication information of the second registered node locally or from the second registered node according to an inquiry message sent by the first registered node, and feeding back the access schedule and the network communication information to the first registered node;
selecting, by the first registered node, a communication manner for message transmission and a time for message transmission according to the access schedule and the network communication information of the second registered node in combination with a local message transmission policy, and sending the selected communication manner for message transmission and the selected time for message transmission and a message to be sent to the second registered node to the node containing the public service entity; and
sending, by the node containing the public service entity, the message to the second registered node within the selected time in accordance with the communication manner for message transmission selected by the first registered node.

8. A message transmission method based on network selection and time arrangement, comprising:
when a message is sent between a first registered node and a second registered node both registering on an identical node containing a public service entity, sending, by the first registered node, a message to be sent to the second registered node to the node containing the public service entity, and indicating that a destination of the message is the second registered node; and
setting, by the node containing the public service entity, a message transmission policy according to an access schedule and network communication information of the second registered node in combination with a transmission policy of the node containing the public service entity, and sending the message to be sent to the second registered node to the second registered node in accordance with the set message transmission policy.

9. A message transmission method based on network selection and time arrangement, comprising:
when a first registered node is to send a message to a second registered node, sending, by the first registered node, the message to be sent to the second registered node to a first-hop node containing a public service entity, wherein it is indicated that a destination of the message is the second registered node;
when the first-hop node containing the public service entity determines that multiple hops exist between the first registered node and the second registered node, selecting a message transmission route according to a policy, analyzing an access schedule and network communication information needing to be transmitted to a next-hop node, configuring a message transmission policy based on a transmission policy of the first-hop node containing the public service entity, and sending the message to a next-hop node containing a public service entity; and
by this analogy, configuring, by a final-hop node containing a public service entity, a message transmission policy according to an access schedule and network communication information of the second registered node in combination with a transmission policy of the final-hop node containing the public service entity, and sending the message to the second registered node in accordance with the configured message transmission policy.

10. A message transmission method based on network selection and time arrangement, comprising:
when a first node containing a public service entity registers on a public service entity of a second node, receiving, by the second node, a registration message sent by the first node, and automatically generating an access schedule and network communication information of the first node on the public service entity of the first node, wherein the access schedule at least contains accessible time, and the network communication information at least contains an access manner supported by the first node.

11. A node device, comprising:
a transceiving unit, configured to receive a registration message from a registered node;and
a storage unit, configured to store an access schedule and network communication information of the registered node contained in the registration message, wherein the access schedule at least contains accessible time, and the network communication information at least contains an access manner supported by the registered node.

12. The node device according to claim 11, wherein the network communication information further comprises priority of the supported access manner.

13. The node device according to claim 11 or 12, further comprising:
an inquiry unit, configured to inquire about an access schedule and network communication information of a message receiving end locally according to an inquiry message sent by a message sending end, wherein
correspondingly, the transceiving unit is configured to feed back the inquired access schedule and network communication information of the message receiving end to the message sending end, and send a message to the message receiving end within selected time in accordance with a communication manner for message transmission selected by the message sending end.

14. The node device according to claim 11 or 12, further comprising:
an inquiry unit, configured to inquire about an access schedule and network communication information of a message receiving end locally;
a processing unit, configured to set a message transmission policy, according to the inquired access schedule and network communication information of the message receiving end in combination with a transmission policy of the node containing the public service entity; and
the transceiving unit, configured to send a message to be sent by the message sending end to the message receiving end in accordance with the message transmission policy set by the processing unit.

15. The node device according to claim 14, wherein
the processing unit is configured to determine whether multiple hops exist between the message sending end and the message receiving end, select, if multiple hops exist, a message transmission route according to a policy, analyze an access schedule and network communication information needing to be transmitted to a next-hop node, configure a message transmission policy based on a transmission policy of the node containing the public service entity, and send the message to a next-hop node containing a public service entity.
